(19) Europäisches Patentamt
European Patent Office
Office européen des brevets

(11) **EP 2 720 213 A1**

(12) **EUROPEAN PATENT APPLICATION**
published in accordance with Art. 153(4) EPC

(43) Date of publication:
**16.04.2014 Bulletin 2014/16**

(51) Int Cl.:
***G08G 1/16*** (2006.01)      ***G06T 1/00*** (2006.01)
***G06T 7/60*** (2006.01)

(21) Application number: **12801148.3**

(22) Date of filing: **07.03.2012**

(86) International application number:
**PCT/JP2012/001576**

(87) International publication number:
**WO 2012/172713 (20.12.2012 Gazette 2012/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2011 JP 2011131222**

(71) Applicant: **Nissan Motor Co., Ltd
Yokohama-shi, Kanagawa 221-0023 (JP)**

(72) Inventors:
• **TAKAHAMA, Taku
  Kanagawa 2430123 (JP)**
• **TAKEDA, Fuminori
  Kanagawa 2430123 (JP)**

(74) Representative: **Hoefer & Partner
Pilgersheimer Straße 20
81543 München (DE)**

(54) **DEVICE FOR DETERMINING ROAD PROFILE, ONBOARD IMAGE-RECOGNITION DEVICE, DEVICE FOR ADJUSTING IMAGE-CAPTURING AXIS, AND LANE-RECOGNITION METHOD.**

(57)     An imaging angle of an imaging unit disposed in a vehicle is estimated with a less computational load. An in-vehicle image recognizing device disposed in a vehicle (1) recognizes a lane shape of a travel lane along which the vehicle (1) travels based on an image captured by a camera (10) capturing an image of a travel road around the vehicle (1). An imaging angle of the camera (10) is calculated based on the recognized lane shape. It is determined whether or not there is a bias in the recognized lane shape, and the imaging angle of the camera (10) is corrected using the imaging angle when it is determined that there is no bias. The standard deviation of the imaging angle when it is determined that there is no bias is calculated, and the imaging angle of the camera (10) is corrected depending on the calculated standard deviation. The behavior of the vehicle (1) is recognized by detecting a speed and a steering angle of the vehicle (1) and the imaging angle of the camera (10) is corrected by determining whether or not there is a bias in the behavior of the vehicle (1).

FIG. 1

**Description**

Technical Field

The present invention relates to a technique of recognizing a shape of a lane or the like along which a vehicle travels with a camera mounted on the vehicle.

Background Art

In a white line recognizing device described in Patent Document 1, an image of left and right lane markers in a travel lane along which a vehicle travels is recognized based on a result captured by a camera. An intersection of extension lines of the left and right lane markers is calculated based on the recognized left and right lane markers and a camera-mounting angle error is calculated by gathering and then averaging the intersections.

Prior Art Document

Patent Document

Patent Document 1: Japanese Patent Application Publication No. 2000-242899 A

Summary of the Invention

Problem to be Solved

In the white line recognizing technique described in Patent Document 1, a variation in a vehicle behavior (such as a yaw rate or a transverse velocity) or a road shape (such as a curvature) may often become an error factor when an imaging angle of a camera is calculated. Therefore, in the white line recognizing technique described in Patent Document 1, it is necessary to extensively travel along a straight lane in which the variation in a vehicle behavior or a road shape is not likely to occur in order to reduce the influence of the error factor. However, generally on highways, since even if a road looks straight, it often actually has a slow curvature, it is necessary to extensively travel a long distance to collect a large amount of data.
In this case, since a large amount of data is computed, there is a problem in that an in-vehicle processor takes a large computational load to perform processes in real time.
The present invention is made in consideration of the above-mentioned circumstances and an object thereof is to correct an error of an imaging angle of an imaging unit disposed in a vehicle and to determine whether or not a road is straight, with a smaller computational load.

Solution to the Problem

In order to achieve the above-mentioned object, according to an aspect of the present invention, an image of periphery of a vehicle is captured with an imaging unit disposed in the vehicle and a lane shape of a travel lane along which the vehicle travels is recognized from the captured image. According to an aspect of the present invention, it is determined that the travel lane is a straight lane, when it is determined that a bias between an intersection of extension lines obtained by approximating left and right lane markers located in a near area to a straight line, and an intersection of extension lines obtained by approximating left and right lane markers located in a far area to a straight line, is equal to or less than a predetermined threshold value, on the basis of the lane shape in the near area relatively close to the vehicle and the lane shape in the far area distant from the vehicle out of the recognized lane shapes.

Advantageous Effects of the Invention

According to the present invention, it is possible to determine whether or not a road is straight with a smaller computational load.

Brief Description of the Drawings

FIG. 1 is a diagram illustrating an example of a vehicle on which an in-vehicle image recognizing device according to a first embodiment of the present invention is mounted.

FIG. 2 is a functional block diagram illustrating an example of a configuration of the in-vehicle image recognizing device according to the first embodiment of the present invention.

FIG. 3 is a functional block diagram illustrating an example of a configuration of a lane shape recognizing unit 102.

FIG. 4 is a schematic diagram illustrating the concept of processes by the lane shape recognizing unit 102.

FIG. 5 is a schematic diagram illustrating the concept of a lane recognition process performed individually for each of the near area and far area.

FIG. 6 is a flowchart illustrating an example of a process by the in-vehicle image recognizing device according to the first embodiment of the present invention.

FIG. 7 is a functional block diagram illustrating an example of a configuration of an in-vehicle image recognizing device according to a second embodiment of the present invention.

FIG. 8 is a flowchart illustrating an example of a process by the in-vehicle image recognizing device according to the second embodiment of the present invention.

FIG. 9 is a functional block diagram illustrating an example of a configuration of an in-vehicle image recognizing device according to a third embodiment of the present invention.

FIG. 10 is a flowchart illustrating an example of a process by the in-vehicle image recognizing device according to the third embodiment of the present invention.

FIG. 11 is a diagram illustrating an advantageous effect of the in-vehicle image recognizing device according to the third embodiment of the present invention.

Description of Embodiments

Hereinafter, embodiments of the present invention will be described with reference to the accompanying drawings. In the following description, elements in each drawing same as those in other drawings will be indicated by the same reference signs.

(First Embodiment)

(Configuration of In-vehicle Image Recognizing Device)

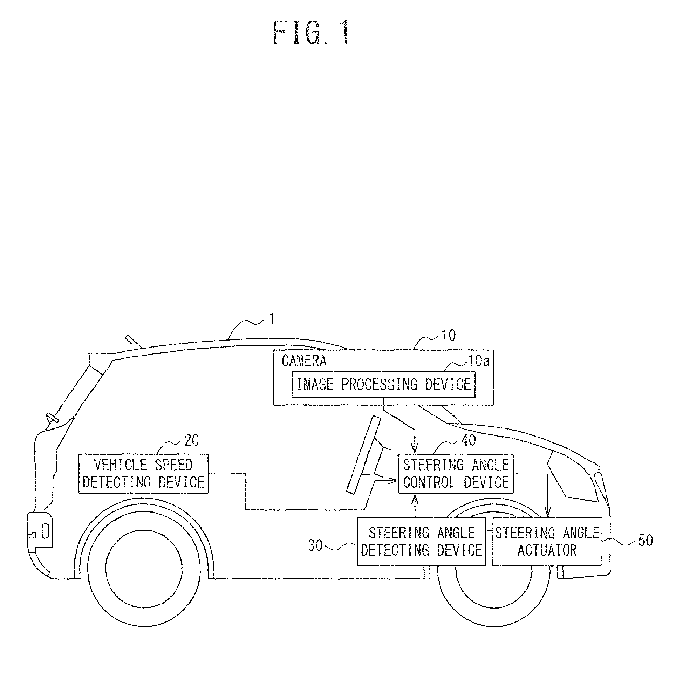

FIG. 1 is a diagram illustrating an example of a vehicle on which an in-vehicle image recognizing device according to this embodiment is mounted. The in-vehicle image recognizing device according to this embodiment is a device that is disposed in a vehicle and that recognizes a lane along which a vehicle travels based on an image captured by an in-vehicle camera. The vehicle 1 includes a camera 10 having an image processing device 10a built therein, a vehicle speed detecting device 20, a steering angle detecting device 30, a steering angle control device 40, and a steering angle actuator 50.

The camera 10 captures an image ahead of the vehicle 1.

The camera 10 is a digital camera including an imaging element such as a CCD (Charge Coupled Device) or a CMOS (Complementary Metal Oxide Semiconductor). More specifically, the camera 10 is a 3CMOS camera of a progressive scan type that captures an image at a high speed.

The camera 10 is disposed, for example, at the front center of the ceiling in the interior of the vehicle 1 so as to capture an image ahead of the vehicle 1 and to capture an image of a travel lane ahead of the vehicle 1 via the front glass. Another arrangement aspect instead of this arrangement aspect may be employed as long as it is a camera capturing an image of the travel lane of the vehicle 1. For example, the camera 10 may be mounted in the back of the vehicle 1, such as a back-view camera, or may be mounted on the front end of the vehicle 1 such as a bumper, or a disposing aspect in which a vanishing point does not appear in the field of view of the camera 10 may be employed. In any case, it is possible to calculate a virtual vanishing point by detecting edges of lane markers and calculating approximate straight lines.

The image processing device 10a is a device that performs a lane recognizing process according to this embodiment. That is, the camera 10 having the image processing device 10a shown in FIG. 1 built therein corresponds to an in-vehicle image recognizing device according to this embodiment.

Information output from the image processing device 10a, the vehicle speed detecting device 20, and the steering angle detecting device 30 is input to the steering angle control device 40. The steering angle control device 40 outputs a signal for realizing a target steering to the steering angle actuator 50.

Each of the camera 10 and the steering angle control device 40 includes a microcomputer and peripheral component thereof or drive circuit of various actuators and transmit and receive information to and from each other via communication circuits. The lane recognizing process according to this embodiment is realized by the above-mentioned hardware configuration.

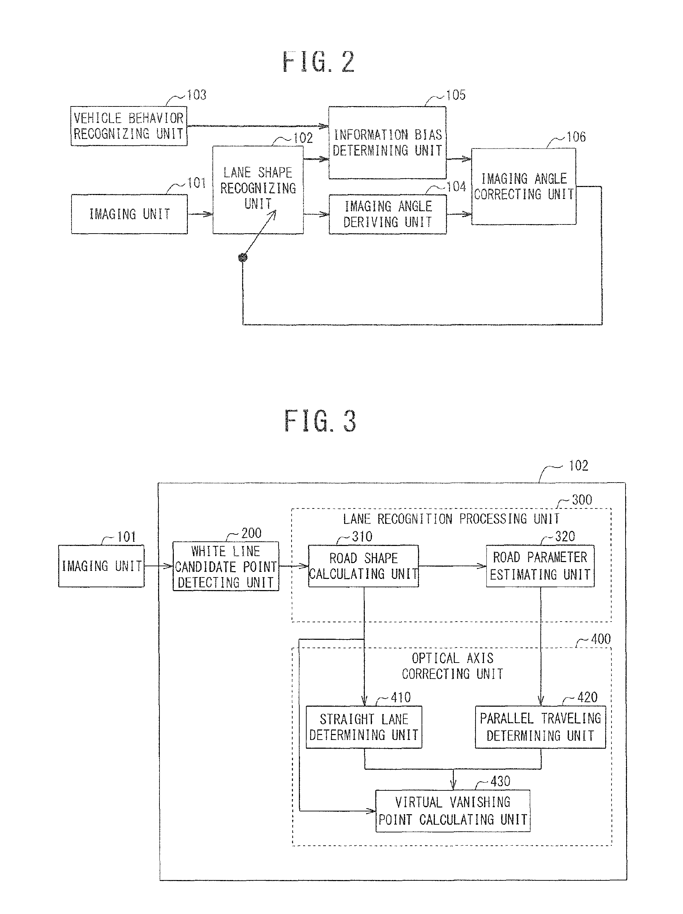

The camera 10 having the image processing device 10a built therein functionally includes an imaging unit 101, a lane shape recognizing unit 102, a vehicle behavior recognizing unit 103, an imaging angle deriving unit 104, an information bias determining unit 105, and an imaging angle correcting unit 106, as illustrated in FIG. 2.

The imaging unit 101 captures an image of the periphery of the vehicle 1.

The lane shape recognizing unit 102 recognizes the lane shape of a travel lane along which the vehicle 1 travels based on the image captured by the imaging unit 101. For example, a known method described in Japanese Patent Application Publication No. 2004-252827 A can be used as a method of detecting a travel lane. For example, a known method described in Japanese Patent Application Publication No. 2004-318618 A can be employed as a method of calculating the shape of a travel lane or the position or posture of the vehicle 1.

The lane shape recognizing unit 102 calculates coordinates of intersections of extension lines of a pair of left and right lane markers in a far area and near area using the lane shape recognized as described above. The coordinates of the intersections are calculated based on the extension lines of a pair of left and right lane markers in the far area and near area, for example, in the following method.

That is, the lane shape recognizing unit 102 includes a computing device that analyzes the image captured by the imaging unit 101 and that calculates a yaw angle C of the vehicle 1, a pitch angle D of the vehicle 1, a height H of the imaging unit 101 from the road surface, a transverse displacement A from the center of a lane, and a curvature B of a travel lane. The lane shape recognizing unit 102 outputs the yaw angle C of the vehicle 1, the transverse displacement A from the center of a lane, and the curvature B of a travel lane, which have been calculated by the computing device, to the steering angle control device 40. Accordingly, for example, automatic steering or the like of the vehicle 1 is realized.

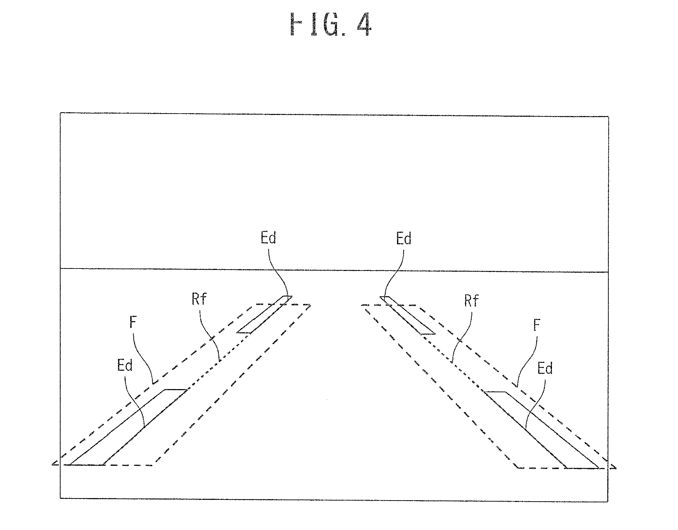

FIG. 3 is a diagram illustrating a configuration example of the lane shape recognizing unit 102. FIG. 4 is a schematic diagram illustrating the concept of processes by the lane shape recognizing unit 102.

In FIG. 3, the lane shape recognizing unit 102 includes a white line candidate point detecting unit 200, a lane recognition processing unit 300, and an optical axis correcting unit 400.

The white line candidate point detecting unit 200 detects candidate points of a white line forming a lane marker on the basis of the image data captured by the imaging unit 101.

The white line candidate point detecting unit 200 acquires a captured image of the travel lane of the vehicle 1 from the imaging unit 101, and detects white line edges Ed by processing the image, as shown in FIG. 4. In the image processing according to this embodiment, a position of an image processing frame F is set for lane markers (white lines) located on the left and right parts of the acquired captured image on the basis of road parameters (a road shape and a vehicle posture relative to the road) to be described later. Then, for example, a first order spatial differentiation using a Sobel filter is performed on the set image processing frames F, whereby the edges of the boundaries between the white lines and the road surface are emphasized, and then the white line edges Ed are extracted.

The lane recognition processing unit 300 includes a road shape calculating unit 310 that approximates a road shape to a straight line and a road parameter estimating unit 320 that estimates a road shape and a vehicle posture relative to the road.

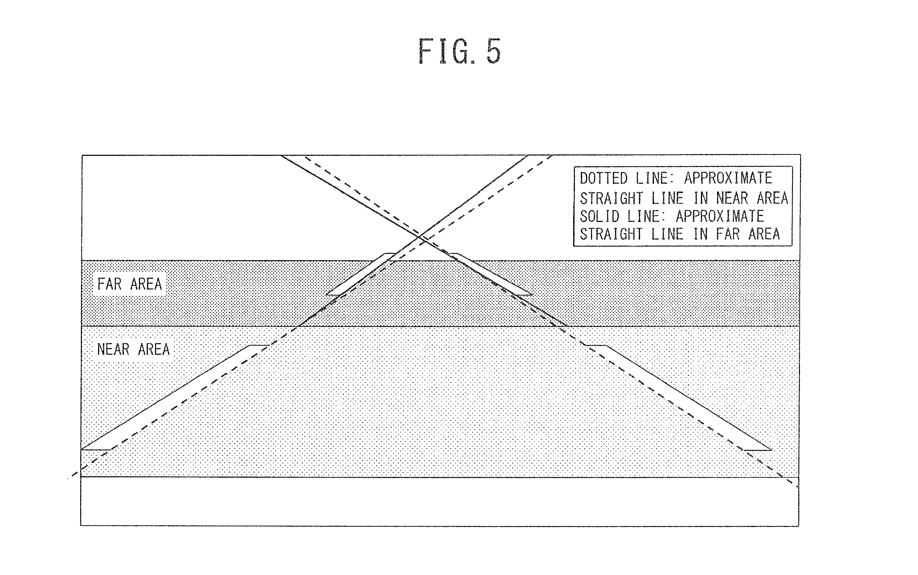

As shown in FIG. 4, the road shape calculating unit 310 calculates an approximate straight line Rf of the road shape by extracting a straight line passing through a predetermined number of pixels Pth at which the intensity of the white line edge Ed extracted by the white line candidate point detecting unit 200 is equal to or more than a predetermined threshold value Edth and connecting one point on the upper side of the detection area to one point on the lower side thereof by the use of a Hough transform. In this embodiment, the image data of the road acquired through imaging thereof is divided into two areas of a near area and a far area and the road shape is approximated to a straight line in each of the areas (see FIG. 5).

The road parameter estimating unit 320 estimates road parameters (a road shape and a vehicle posture relative to the road) based on the approximate straight line Rf of the road shape detected by the road shape calculating unit 310 using Expression (1) as a road model formula.

$$x = \left( \frac{A - \frac{W}{2}}{H} \right)(y + f \cdot D) - \frac{B \cdot H \cdot f^2}{(y + f \cdot D)} - C \cdot f + jW(y + f \cdot D) \qquad (1)$$

Here, parameters A, B, C, D, and H in Expression (1) represent road parameters and vehicle state quantities estimated by the road parameter estimating unit 320. Parameters A, B, C, D, and H are the transverse displacement (A) of the vehicle 1 relative to the lane, the road curvature (B), the yaw angle (C) of the vehicle 1 about the lane, the pitch angle (D) of the vehicle 1, and the height (H) of the imaging unit 101 from the road surface, respectively.

W is a constant indicating a lane width (a distance between the insides of the left and right white lines on an actual road) and f is a perspective transformation constant of the camera. Here, j is a parameter for distinguishing the left and right white lines from each other, j=0 represents the left white line, and j=1 represents the right white line. In addition, (x, y) are coordinates on a road image of a point on lane inner edges of the left or right white line, with the upper-left corner of the road image taken as an origin, the right direction taken as a positive direction of an x axis, and the lower direction taken as a positive direction of a y axis.

The optical axis correcting unit 400 includes a straight lane determining unit 410 that determines whether or not the travel lane of the vehicle 1 is a straight lane, a parallel traveling determining unit 420 that determines whether or not the vehicle 1 travels in parallel to the travel lane, and a virtual vanishing point calculating unit 430 that calculates a virtual vanishing point based on the approximate straight line Rf of the road shape.

The straight lane determining unit 410 determines whether or not the travel lane of the vehicle 1 is a straight lane, based on the degree of coincidence between the slopes of linear equations and the degree of coincidence between the values of intercepts of linear equations, regarding the approximate straight lines Rf of the road shape in the far area and near area calculated by the road shape calculating unit 310.

The parallel traveling determining unit 420 determines whether or not the vehicle 1 travels in parallel to the travel lane on the basis of the vehicle posture of the vehicle 1 relative to the travel lane, which is estimated by the road parameter estimating unit 320. Specifically, the parallel traveling determining unit 420 calculates, using the transverse displacement A of the vehicle 1 relative to the lane which is one of vehicle state quantity estimated by the road parameter estimating unit 320, the transverse velocity (the differential value of the transverse displacement A) relative to the lane of the vehicle 1 based on a difference between the current value and the past value of the transverse displacement A. When the calculated transverse velocity is equal to or less than a predetermined threshold value, it is determined that the vehicle 1 travels in parallel to the travel lane. When the vehicle 1 travels in parallel to the travel lane and the travel lane is a straight lane, it means that the vehicle 1 travels straight.

The virtual vanishing point calculating unit 430 calculates an intersection of the left and right approximate straight lines Rf of the road shape as a virtual vanishing point when the straight lane determining unit 410 and the parallel traveling determining unit 420 determine that the travel lane of the vehicle 1 is a straight lane and the vehicle 1 travels in parallel to the travel lane of the vehicle 1.

FIG. 5 is a schematic diagram illustrating the concept of a lane recognition process performed individually for each of the near area and far area. FIG. 5 illustrates a curved road having a relatively large radius, for example.

As shown in FIG. 5, the lane shape recognizing unit 102 divides the image data captured by the imaging unit 101 into a near area (lower part of the image) and a far area (center part of the image), and the white line candidate point detecting unit 200 and the lane recognition processing unit 300 detect the white edges Ed and the approximate straight line Rf, respectively, for each of the areas. The straight lane determining unit 410 determines whether or not the travel lane is a straight line on the basis of the degree of coincidence therebetween. For example, the straight lane determining unit 410 determines that the approximate straight lines Rf coincide with each other and that the travel lane is a straight line, when the difference between the slopes of the approximate straight lines Rf in the near area and far area is less than a predetermined threshold value, and the difference between the intercepts of the approximate straight lines Rf is less than a predetermined threshold value.

The coordinates of the intersection for the near area and the coordinates of the intersection for the far area, which are calculated as described above, are defined as (Pn_x, Pn_y) and (Pf_x, Pf_y), respectively.

Referring back to FIG. 2, the vehicle behavior recognizing unit 103 recognizes the behavior of the vehicle 1 including the imaging unit 101. Specifically, the vehicle behavior recognizing unit 103 determines the behavior of the vehicle 1 on the basis of the vehicle speed (traveling speed) of the vehicle 1 detected by the vehicle speed detecting device 20, the steering angle detected by the steering angle detecting device 30, accelerations in the longitudinal and vehicle width directions of the vehicle detected by an acceleration sensor not shown, a yaw rate value detected by a yaw rate sensor, and the like.

The imaging angle deriving unit 104 calculates the imaging angle of the imaging unit 101 based on the lane shape recognized by the lane shape recognizing unit 102.

The information bias determining unit 105 determines whether or not there is a bias in at least one of results of recorganization by the lane shape recognizing unit 102 and the vehicle behavior recognizing unit 103.

The imaging angle correcting unit 106 corrects the imaging angle of the imaging unit 101 using the imaging angle output from the imaging angle deriving unit 104 when the information bias determining unit 105 determines that the bias is equal to or less than a predetermined threshold value.

(Process Flow in In-vehicle Image Recognizing Device)

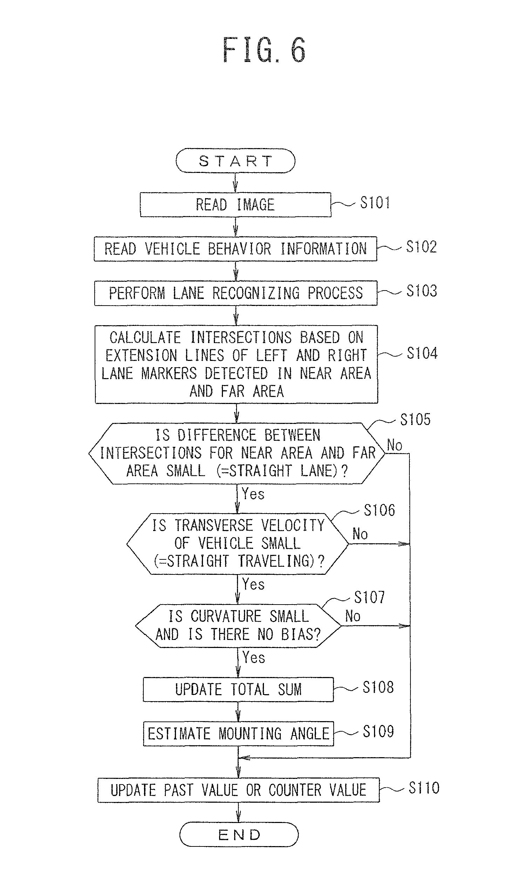

The process by the in-vehicle image recognizing device according to this embodiment will be described below with reference to the flowchart illustrated in FIG. 6. The process by the in-vehicle image recognizing device illustrated in FIG. 6 is repeatedly performed every predetermined time interval (for example, 50 ms (millisecond)).

In step S101, the lane shape recognizing unit 102 reads an image ahead of the vehicle 1 captured by the imaging unit 101. In step S102, the vehicle behavior recognizing unit 103 reads the vehicle speed of the vehicle 1 detected by the vehicle speed detecting device 20 or the steering angle detected by the steering angle detecting device 30.

In step S103, the lane shape recognizing unit 102 processes the captured image of the imaging unit 101 read in step S101 to recognize the travel lane along which the vehicle 1 travels and to calculate the position, the vehicle posture, or the like of the vehicle 1 relative to the travel lane.

In step S104, based on the extension lines of a pair of left and right lane markers in the far area and near area, the lane shape recognizing unit 102 calculates the coordinates of the intersections of the extension lines using the lane shape recognized in step S103. As described above, the intersection coordinates for the near area calculated by the lane shape recognizing unit 102 in this step are defined as (Pn_x, Pn_y) and the intersection coordinates for the far area are defined as (Pf_x, Pf_y).

In step S105, the straight lane determining unit 410 determines whether or not the travel lane is a straight lane using the following expression based on the intersection coordinates for the far area and the near area calculated in step S104. When the following expression is satisfied, the process progresses to step S106. Otherwise, the process progresses to step S110.

$$\mathrm{abs(Pn\_x-Pf\_x) \leq TH\_Px} \qquad \ldots(0-1)$$

In Expression (0-1), abs(A) represents a function returning the absolute value of A. The value of HP_Px is a predetermined positive value such as 1.0. When Expression (0-1) is satisfied, it means that the intersection coordinates of the extension lines of the left and right lane markers detected in only the near area of the captured image by the camera is close to the intersection coordinates of the extension lines of the left and right lane markers detected in the far area. That is, when this condition is established, it means that the travel lane is a straight lane direction of which does not change from the far area to the near area.

In step S106, the parallel traveling determining unit 420 calculates the speed Ydot in the transverse direction of the vehicle by using the offset position (the distance to the lane marker in the transverse direction) Y in the transverse direction of the vehicle relative to the travel lane calculated in step S103 as an input and performing a pseudo temporal differentiation using the transfer function of the following expression. When Expression (0-4) is satisfied, the process progresses to step S107. Otherwise, the process progresses to step S110.

$$\mathrm{G(Z^{-1}) = (c-cZ^{-2}) / (1-aZ^{-1}+bZ^{-2})} \qquad \ldots(0-2)$$

$$\mathrm{Ydot=G(Z^{-1})Y} \qquad \ldots(0-3)$$

$$\mathrm{abs(Ydot) \leq TH\_Ydot} \qquad \ldots(0-4)$$

Here, $Z^{-1}$ represents a delay operator and coefficients a, b, and c are all positive values and are discretized with a sampling period of 50 ms so as to have a predetermined frequency characteristic. The value of TH_Ydot is a predetermined positive value such as 0. 03 and may be a large value based on the magnitude of the vehicle speed. When Expression (0-4) is satisfied, it means that the vehicle does not move in the transverse direction relative to the lane markers, i.e., the vehicle travels along the lane markers in a state where the vehicle does not wander transversely. In addition, when both Expressions (0-1) and (0-4) are satisfied, it means that the vehicle travels straight along a straight road.

In step S107, the straight lane determining unit 410 determines whether or not the road curvature Row calculated in step S103 satisfies both conditions of the following expressions. When the road curvature Row satisfies both conditions of the following expressions, the process progresses to step S108. Otherwise, the process progresses to step S110.

$$abs(Row) < TH\_ROW \qquad \ldots(1\text{-}1)$$

$$abs(SumTotalRow+Row) < TH\_ROW \qquad \ldots(1\text{-}2)$$

In Expressions (1-1) and (1-2), abs(A) represents a function returning the absolute value of A. SumTotalRow represents the total sum of the road curvature Row. TH_Row represents a threshold value when the travel lane is considered as a straight lane. The information bias determining unit 105 determines that the travel lane is a straight lane when the absolute value of the road curvature Row and the absolute value of the total sum SumTotalRow+Row thereof is less than TH_ROW. The value of TH_ROW is a predetermined positive value such as 0.0003, for example.

That is, when it is determined in steps S1057 and S107 that the travel lane recognized by the lane shape recognizing unit 102 is a straight lane, the imaging angle of the imaging unit 101 is corrected after step S108. In this way, the reason of limiting the scene where imaging angle of the imaging unit 101 is corrected to the scene corresponding to a straight lane is that when the travel lane is a straight lane, the point at infinity of the straight lane serves as central coordinates of an image which is processed. That is, when the central coordinates are calculated based on the intersection of the extension lines of a pair of left and right lane markers recognized on a straight lane, the accuracy is generally higher than that when the central coordinates are calculated on a curved lane and corrected by using an estimated curvature.

In step S108, the total sum SumTotalRow of the road curvature is updated using the following expression.

$$SumTotalRow=SumTotalRow+Row \qquad \ldots(1\text{-}3)$$

In step S109, the imaging angle correcting unit 106 corrects the imaging angle of the imaging unit 101 using the following expressions and determines the corrected imaging angle of the imaging unit 101.

$$FOE\_X\_est=0.9 \times FOE\_X\_est+0.1 \times Pn\_x \qquad \ldots(1\text{-}4)$$

$$FOE\_Y\_est=0.9 \times FOE\_Y\_est+0.1 \times Pn\_y \qquad \ldots(1\text{-}5)$$

FOE_X_est and FOE_Y_est represent coordinates on the captured image of the forward viewing from the vehicle 1 corresponding to the imaging angle of the imaging unit 101, and the initial values thereof are measured values of the camera mounting error (also referred to as a camera imaging angle error) with respect to a fixed target in an initial adjustment (calibration of a mounting error called plant aiming or the like) performed in a plant or the like. The coordinates calculated using Expressions (1-4) and (1-5) are used as origin coordinates when the lane recognizing process of step S103 is performed in the next time. Here, aiming indicates optical axis adjustment.

In step S110, a past value used in a filter or the like or a counter value used in a timer or the like is updated and the process is terminated.

The value of SumTotalRow is initialized to "0" before performing the process flow illustrated in FIG. 6.

(Summary)

The above-mentioned in-vehicle image recognizing device recognizes the lane shape of the travel lane along which the vehicle 1 travels based on the captured image of the imaging unit 101 obtained by capturing an image of the runways around the vehicle 1. The imaging angle of the imaging unit 101 is calculated based on the recognized lane shape. Then, it is determined whether or not there is a bias in the recognized lane shape and then the imaging angle of the imaging unit 101 is corrected using the imaging angle when it is determined that there is no bias.

Accordingly, even when there is a bias in the road shape such as when a vehicle travels in a highway only one-way or travels in a road having a lot of right curves, it is possible to accurately correct the error of the imaging angle of the imaging unit with a smaller processing load.

In this embodiment, a standard deviation calculating unit is not provided, but a result aimed at a specific state along which a vehicle travels straight in a straight lane in a state without a bias may be used as an input and correction using Expressions (1-4) and (1-5) may be performed thereon. In this case, since the input value has a strong tendency to be a normalized distribution, the correction accuracy is high.

(Effects of First Embodiment)

This embodiment exhibits the following effects.

(1) The in-vehicle image recognizing device according to this embodiment is an in-vehicle image recognizing device mounted on a vehicle 1. The imaging unit 101 captures an image of the periphery of the vehicle 1. The lane shape recognizing unit 102 recognizes the lane shape of the travel lane along which the vehicle 1 travels based on the image captured by the imaging unit 101. The imaging angle deriving unit 104 derives the imaging angle of the imaging unit 101 based on the lane shape recognized by the lane shape recognizing unit 102. The straight lane determining unit 410 determines whether or not there is an intersection bias between the intersection of the extension lines obtained by approximating the left and right lane markers located in the near area to a straight line and the intersection of the extension lines obtained by approximating the left and right lane markers located in the far area to a straight line, on the basis of the lane shape in the near area relatively close to the vehicle and the lane shape in the far area distant from the vehicle out of the lane shapes recognized by the lane shape recognizing unit. The imaging angle correcting unit 106 corrects the imaging angle of the imaging unit 101 using the imaging angle derived by the imaging angle deriving unit 104 when the straight lane determining unit 410 determines that the bias is less than a threshold value.

Accordingly, even when there is a bias in the road shape such as when a vehicle travels in a highway only one-way or travels in a road having a lot of right curves, it is possible to estimate the imaging angle of the imaging unit with a smaller computational load.
It is possible to determine whether or not a travel lane is a straight lane by using the bias of the intersections with higher accuracy.

(2) The straight lane determining unit 410 determines that the bias is less than a threshold value when the absolute value of the value indicating the recognized lane shape of the lane shape recognized by the lane shape recognizing unit 102 is less than a predetermined threshold value and the total sum of the values indicating the lane shapes is less than a threshold value. The information bias determining unit 105 determines whether or not there is a bias using the road curvature recognized by the lane shape recognizing unit 102.

Accordingly, even when there is a bias in the road shape such as when a vehicle travels in a highway only one-way or travels in a road having a lot of right curves, it is possible to estimate the imaging angle of the imaging unit with a smaller computational load.

(3) The vehicle speed detecting device 20 detects the vehicle speed of a vehicle 1. The steering angle detecting device 30 detects the steering angle of the vehicle 1. The vehicle behavior recognizing unit 103 recognizes the behavior of the vehicle 1 based on the vehicle speed detected by the vehicle speed detecting device 20 and the steering angle detected by the steering angle detecting device 30. When it is determined that the bias of the behavior of the vehicle 1 recognized by the vehicle behavior recognizing unit 103 is less than a threshold value, the imaging angle of the imaging unit 101 is corrected.

Accordingly, even when there is a bias in the road shape such as when a vehicle travels in a highway only one-way or travels in a road having a lot of right curves, it is possible to estimate the imaging angle of the imaging unit with a smaller computational load.

(4) The lane shape recognizing unit 102 detects a parameter associated with the road curvature. The information bias determining unit 105 determines whether or not the value of the parameter associated with the road curvature converges on a predetermined range. The information bias determining unit 105 integrates the parameter values within a predetermined time from the time point at which it is determined that the parameter converges. The information bias determining unit 105 determines whether or not the vehicle is in a straight traveling state by determining that the integrated value is less than a predetermined value. The image recognizing device performs an aiming process when the information bias determining unit 105 determines that the vehicle is in a straight traveling state.

Accordingly, even when there is a bias in the road shape such as when a vehicle travels in a highway only one-way or travels in a road having a lot of right curves, it is possible to estimate the imaging angle of the imaging unit with a smaller computational load.

(Second Embodiment)

A second embodiment will be described below with reference to the accompanying drawings. The same elements as in the first embodiment will be referenced by the same reference signs.

(Configuration of In-vehicle Image Recognizing Device)

The basic configuration in this embodiment is similar to that in the first embodiment. However, the in-vehicle image recognizing device according to this embodiment is different from that according to the first embodiment, in that it further includes a standard deviation calculating unit.

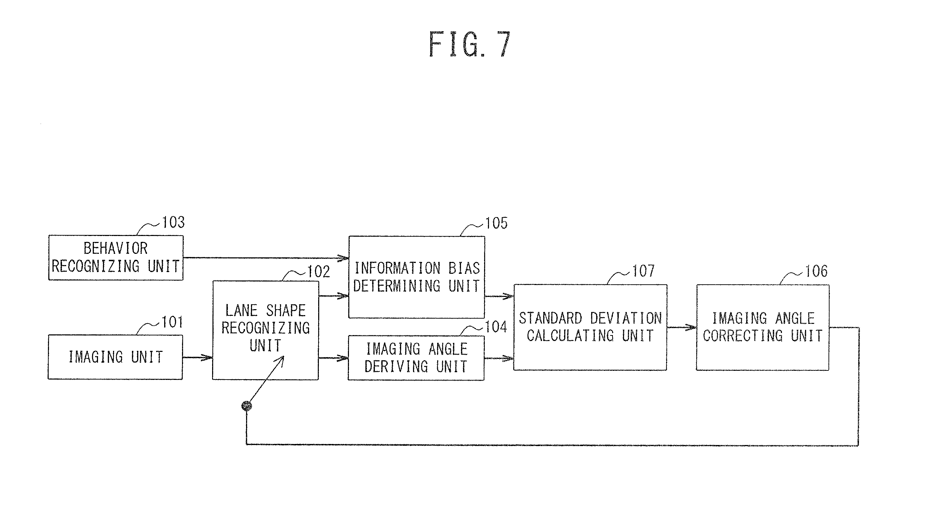

FIG. 7 is a diagram illustrating an example of the configuration of the in-vehicle image recognizing device according to this embodiment. The in-vehicle image recognizing device according to this embodiment includes an imaging unit 101, a lane shape recognizing unit 102, a vehicle behavior recognizing unit 103, an imaging angle deriving unit 104, an information bias determining unit 105, and an imaging angle correcting unit 106, and a standard deviation calculating unit 107.

The standard deviation calculating unit 107 calculates a standard deviation of the imaging angle derived by the imaging angle deriving unit 104 when the information bias determining unit 105 determines that there is no bias.

The imaging angle correcting unit 106 corrects the imaging angle of the imaging unit 101 on the basis of the standard deviation calculated by the standard deviation calculating unit 107.

(Process Flow in In-vehicle Image Recognizing Device)

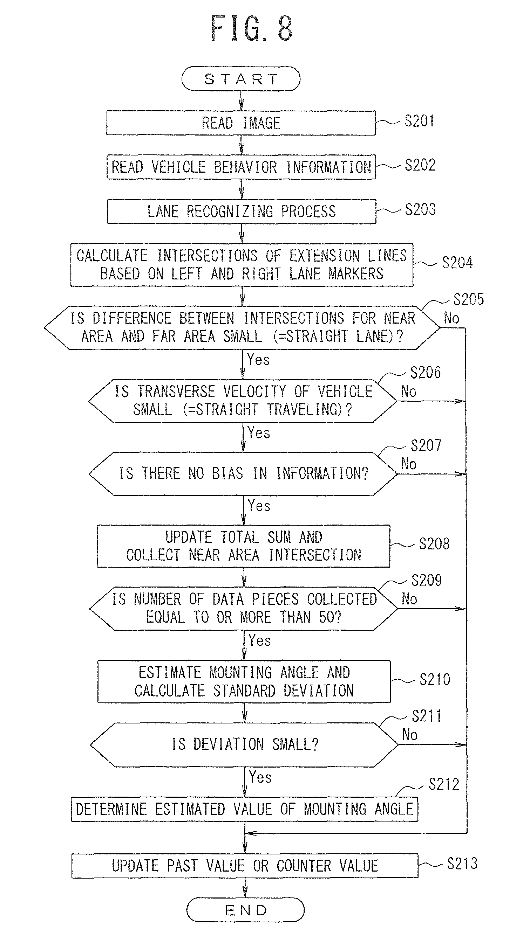

The process by the in-vehicle image recognizing device according to this embodiment will be described below with reference to the flowchart illustrated in FIG. 8. The process flow in the in-vehicle image recognizing device illustrated in FIG. 8 is repeatedly performed every predetermined time interval (for example, 50 ms (millisecond)).

In step S201, the lane shape recognizing unit 102 reads an image ahead of the vehicle 1 captured by the imaging unit 101. In step S202, the vehicle behavior recognizing unit 103 reads the vehicle speed of the vehicle 1 detected by the vehicle speed detecting device 20, the steering angle detected by the steering angle detecting device 30, the acceleration in the longitudinal direction detected by an acceleration sensor, and the yaw rate value from a yaw rate sensor.

In step S203, the lane shape recognizing unit 102 processes the captured image of the imaging unit 101 read in step S201 to recognize the travel lane in which the vehicle 1 travels and to calculate the position, the vehicle posture, or the like of the vehicle 1 relative to the travel lane. In step S204, based on the extension lines of a pair of left and right lane markers in the far area and the near area, the lane shape recognizing unit 102 calculates the coordinates of the intersections of the extension lines using the lane shape recognized in step S203. As described above, the intersection coordinates for the near area calculated by the lane shape recognizing unit 102 in this step are defined as $(Pn\_x, Pn\_y)$ and the intersection coordinates for the far area are defined as $(Pf\_x, Pf\_y)$.

In step S205, the straight lane determining unit 410 determines whether or not the travel lane is a straight lane using the following expression based on the intersection coordinates for the far area and the near area calculated in step S204. When the following expression is satisfied, the process progresses to step S206. Otherwise, the process progresses to step S213. This process is the same as the process of step S105 in the first embodiment.

$$\mathtt{abs(Pn\_x-Pf\_x)<TH\_PX} \qquad \qquad \ldots(2-1)$$

$$\mathtt{abs(Pn\_y-Pf\_y)<TH\_PY} \qquad \qquad \ldots(2-2)$$

In these expressions, TH_PX represents a threshold value for the difference between the intersection coordinates for the far area and the near area in the horizontal direction of the captured image. TH_PY represents a threshold value for the difference between the intersection coordinates for the far area and the near area in the vertical direction of the captured image.

In step S206, the parallel traveling determining unit 420 calculates the speed Ydot in the transverse direction of the vehicle by using the offset position (the distance to the lane marker in the transverse direction) Y in the transverse direction of the vehicle relative to the travel lane calculated in step S203 as an input and performing a pseudo temporal differentiation using the transfer functions of Expressions (0-2) and (0-3). When Expression (0-4) is satisfied, the process progresses to step S207. Otherwise, the process progresses to step S213.

In step S207, the information bias determining unit 105 determines whether or not all the conditions of the following expressions are satisfied. When it is determined that all the conditions of the following expressions are satisfied, the process progresses to step S208. Otherwise, the process progresses to step S213.

$$\mathrm{abs(SumTotalPx+Pn\_x-Pf\_x)<TH\_PX} \qquad \ldots(2\text{-}3)$$

$$\mathrm{abs(SumTotalPy+Pn\_y-Pf\_y)<TH\_PY} \qquad \ldots(2\text{-}4)$$

$$\mathrm{abs(YawRate)<TH\_YR} \qquad \ldots(2\text{-}5)$$

$$\mathrm{abs(SumTotalYR+YawRate)<TH\_YR} \qquad \ldots(2\text{-}6)$$

$$\mathrm{abs(VspDot)<TH\_VD} \qquad \ldots(2\text{-}7)$$

$$\mathrm{abs(SumTotalVD+VspDot)<TH\_VD} \qquad \ldots(2\text{-}8)$$

YawRate represents a yaw rate value indicating the speed in the turning direction of the vehicle 1. SumTotalYR represents the total sum of YawRate. TH_YR represents a threshold value when the vehicle 1 is considered to travel straight, where when the absolute value of YawRate and the total sum SumTotalYR of YawRate is less than TH_YR, the vehicle 1 is considered to travel straight (Expressions (2-5) and (2-6)).

VspDot represents the acceleration in the longitudinal direction of the vehicle 1. TH_VD represents a threshold value when the vehicle 1 is considered to travel at a constant speed, where the vehicle 1 is considered to travel at a constant speed when the absolute value of VspDot is less than TH_VD. SumTotalVD represents the total sum of VspDot.

That is, when the vehicle 1 is considered to travel straight in a straight lane on the basis of the lane shape recognized by the vehicle behavior recognizing unit 103 and the lane shape recognizing unit 102 (when both conditions of steps S205 and S206 are satisfied), there is no bias in the travel lane (when both Expressions (2-3) and (2-4) are satisfied), and there is no bias in traveling (when all of Expressions (2-5) to (2-8) are satisfied), the imaging angle of the imaging unit 101 is corrected in and after step S208. In this way, the reason of limiting the scene where the imaging angle of the imaging unit 101 is corrected to the scene in which the vehicle 1 travels straight in a straight lane and the case where there is no bias in the travel lane and the traveling is as follows.

That is, a time delay of hardware such as inputting of the captured image of the imaging unit 101 or a time delay of software such as image processing necessarily occurs. However, even in such a case, it is intended to calculate the intersection coordinates corresponding to the imaging angle of the imaging unit 101 with high accuracy, by making it difficult to receive the influence of disturbance due to the behavior of the vehicle 1. Even when a difference in encounter frequency between a right curve and a left curve is large, it is possible to correctly calculate a camera-mounting angle error.

In step S208, SumTotalPx, SumTotalPy, SumTotalYR, SumTotalVD, SumCount, and coordinate data for near area intersections are updated and are stored in a memory for collecting using the following expressions.

$$\mathrm{SumTotalPx=SumTotalPx+Pn\_x-Pf\_x} \qquad \ldots(2\text{-}9)$$

$$\text{SumTotalPy=SumTotalPy+Pn\_y-Pf\_y} \qquad \text{...} (2\text{-}10)$$

$$\text{SumTotalYR=SumTotalYR+YawRate} \qquad \text{...} (2\text{-}11)$$

$$\text{SumTotalVD=SumTotalVD+VspDot} \qquad \text{...} (2\text{-}12)$$

$$\text{FOE\_X\_DataRcd[SumCount]=Pn\_x} \qquad \text{...} (2\text{-}13)$$

$$\text{FOE\_Y\_DataRcd[SumCount]=Pn\_y} \qquad \text{...} (2\text{-}14)$$

$$\text{SumCount=SumCount+1} \qquad \text{...} (2\text{-}15)$$

In these expressions, FOE_X_DataRcd[] represents a parameter for storing a horizontal coordinate on the captured image of the forward viewing in the traveling direction of the vehicle 1, and FOE_Y_DataRcd[] represents a parameter for storing a vertical coordinate on the captured image of the forward viewing in the traveling direction of the vehicle 1. These parameters are stored in a RAM memory, not shown.

SumCount represents a counter for counting the number of coordinate data pieces of the collected near area intersections and the initial value thereof is set to "0". SumCount is initialized before performing the process illustrated in FIG. 8.

In step S209, it is determined whether or not the number of coordinate data pieces on the collected near area intersections is equal to or more than 50. Specifically, when the condition of the following expression is satisfied (when the number of coordinate data pieces on the near area intersections is equal to or more than 50), the process progresses to step S210. Otherwise, the process progresses to step S213.

$$\text{SumCount>=50} \qquad \text{...} (2\text{-}16)$$

In step S210, the imaging angle deriving unit 104 calculates the imaging angle of the imaging unit 101 using Expressions (2-17) and (2-18). The standard deviation calculating unit 107 calculates the standard deviation of the imaging angle of the imaging unit 101 using Expressions (2-19) and (2-20).

$$\text{FOE\_X\_e\_tmp=}\Sigma\text{FOE\_X\_DataRcd/SumCount} \qquad \text{...} (2\text{-}17)$$

$$\text{FOE\_Y\_e\_tmp=}\Sigma\text{FOE\_Y\_DataRcd/SumCount} \qquad \text{...} (2\text{-}18)$$

$$\text{FOE\_X\_stdev=}\sqrt{}\Sigma\text{(FOE\_X\_e\_tmp-FOE\_X\_DataRcd)2/SumCount}$$
$$\text{...} (2\text{-}19)$$

$$FOE\_Y\_stdev=\sqrt{\Sigma}\ (FOE\_Y\_e\_tmp-FOE\_Y\_DataRcd)\ 2/SumCount$$

$$...(2-20)$$

$\Sigma$ in the above expressions represents an operator for calculating the total sum of the number of coordinate data pieces on the near area intersections, which is represented by SumCount.

In step S211, the deviation of candidates of the imaging angle of the imaging unit 101 derived by the imaging angle deriving unit 104 is determined. Specifically, when all the conditions of the following expressions are satisfied, the process progresses to step S212. Otherwise, the process progresses to step S213.

$$FOE\_X\_stdev<TH\_STDEV \qquad\qquad ...(2-21)$$

$$FOE\_Y\_stdev<TH\_STDEV \qquad\qquad ...(2-22)$$

TH_STDEV represents a threshold value for the deviation allowable for the candidates of the imaging angle of the imaging unit 101 derived by the imaging angle deriving unit 104. TH_STDEV has a positive value such as 1.0 pix. That is, when the values of each of the standard deviations FOE_X_stdev and FOE_Y_stdev calculated in step S210 is smaller than TH_STDEV, it is determined that the deviation of candidates of the imaging angle of the imaging unit 101 derived by the imaging angle deriving unit 104 is small and the imaging angle of the imaging unit 101 is corrected in step S212.

In this way, by performing the correction only when the deviation is small on the basis of the calculated standard deviation, it is possible to enhance correction accuracy more than that in the first embodiment. The correction accuracy of the imaging angle in the present invention after the plant aiming can be regulated as a specific value.

In step S212, the imaging angle correcting unit 106 determines the imaging angle of the imaging unit 101 after the correction using the following expressions. These coordinates are used as origin coordinates when the lane recognizing process of step S203 is performed.

$$FOE\_X\_est=FOE\_X\_e\_tmp \qquad\qquad ...(2-23)$$

$$FOE\_Y\_est=FOE\_Y\_e\_tmp \qquad\qquad ...(2-24)$$

In step S213, a past value used in a filter or the like or a counter value used in a timer or the like is updated and the process is terminated.

The value of SumCount is initialized to "0" before performing the process flow illustrated in FIG. 8.

(Summary)

The configuration of the in-vehicle image recognizing device according to this embodiment is the same as that in the first embodiment, except for the configuration of the standard deviation calculating unit 107.

In the in-vehicle image recognizing device according to this embodiment, the standard deviation calculating unit 107 calculates the standard deviation of the imaging angle of the imaging unit 101 when it is determined that there is no bias. The imaging angle of the imaging unit 101 is corrected on the basis of the calculated standard deviation.

Accordingly, it is possible to enhance accuracy in estimating the imaging angle of the imaging unit 101.

(Effects of Second Embodiment)

This embodiment exhibits the following effects in addition to the effects of the first embodiment.

(1) The standard deviation calculating unit 107 calculates the standard deviation of the imaging angle derived by the imaging angle deriving unit 104 when the information bias determining unit 105 determines that the bias is less than the threshold value. The imaging angle correcting unit 106 corrects the imaging angle of the imaging unit 101 on the basis of the standard deviation calculated by the standard deviation calculating unit 107.

Accordingly, it is possible to enhance accuracy in estimating the imaging angle of the imaging unit 101. Since the information bias determining unit 105 determines whether or not there is a bias in information, collects only information determined to have no bias, and calculates the standard deviation, the deviation standard has a strong tendency to be a normalized distribution even with a small number of data pieces (for example, 50 data pieces) and it is thus possible to correctly determine the degree of deviation with a small computational load.

(2) In this embodiment, the behavior of the vehicle 1 recognized by the vehicle behavior recognizing unit 103 is information on the rotational behavior in the vehicle width direction of the vehicle 1. The vehicle behavior recognizing unit 103 recognizes the behavior of the vehicle 1 based on the temporal variation in the position in the vehicle width direction or the temporal variation in the yaw angle of the vehicle 1 relative to the travel lane recognized by the lane shape recognizing unit 102.

Accordingly, it is possible to enhance accuracy in estimating the imaging angle of the imaging unit 101.

(Third Embodiment)

A third embodiment will be described below with reference to the accompanying drawings. The same elements as in the first embodiment and the second embodiment will be referenced by the same reference signs.

(Configuration of In-vehicle Image Recognizing Device)

The basic configuration in this embodiment is similar to that in the second embodiment. However, the in-vehicle image recognizing device according to this embodiment is different from that according to the second embodiment in that it further includes a termination unit.

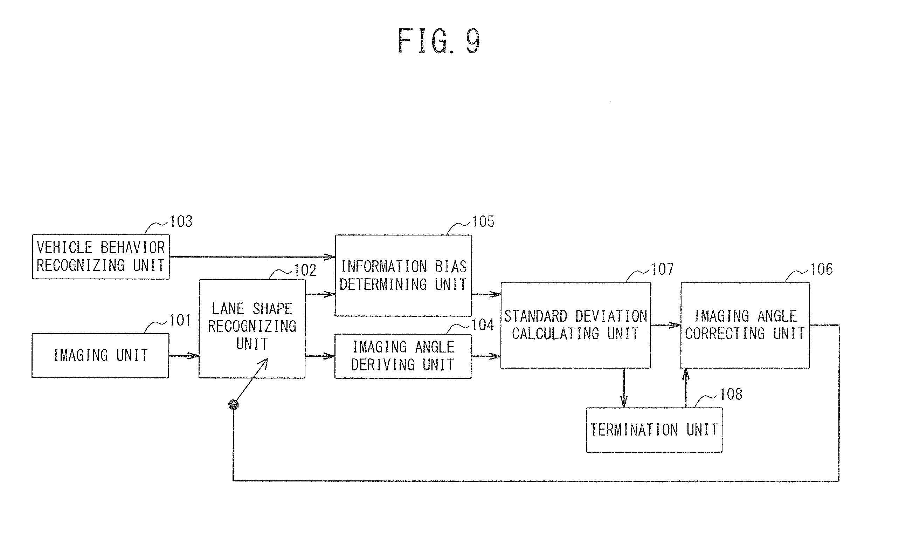

FIG. 9 is a diagram illustrating an example of the configuration of the in-vehicle image recognizing device according to this embodiment. The in-vehicle image recognizing device according to this embodiment includes an imaging unit 101, a lane shape recognizing unit 102, a vehicle behavior recognizing unit 103, an imaging angle deriving unit 104, an information bias determining unit 105, and an imaging angle correcting unit 106, a standard deviation calculating unit 107, and a termination unit 108.

The termination unit 108 terminates the correcting of the imaging angle when the standard deviation calculated by the standard deviation calculating unit 107 is less than a predetermined value.

(Process Flow in In-vehicle Image Recognizing Device)

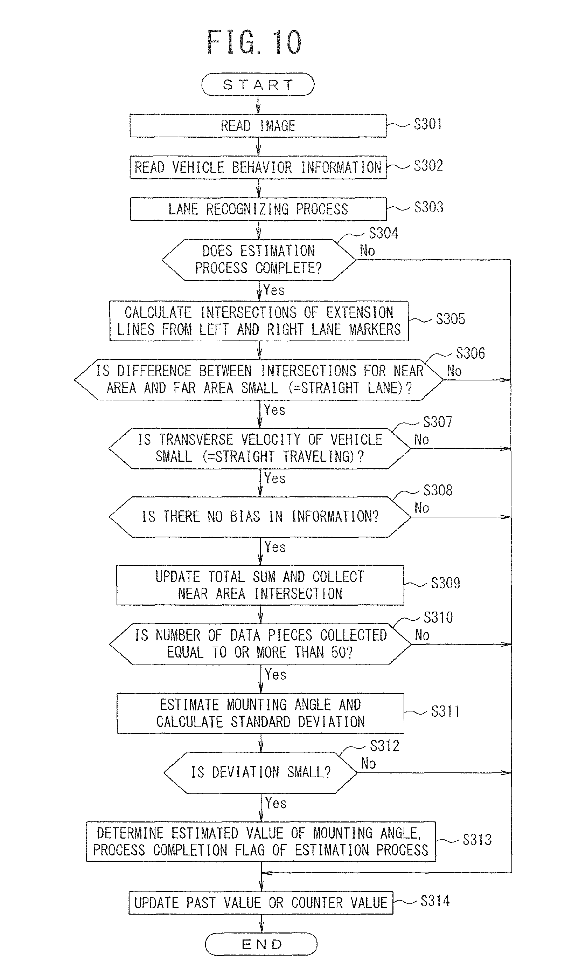

The process by the in-vehicle image recognizing device according to this embodiment will be described below with reference to the flowchart illustrated in FIG. 10. The process by the in-vehicle image recognizing device illustrated in FIG. 10 is repeatedly performed every predetermined time interval (for example, 50 ms (milliseconds)).

In step S301, the lane shape recognizing unit 102 reads an image ahead of the vehicle 1 captured by the imaging unit 101. In step S302, the vehicle behavior recognizing unit 103 reads the speed in the vehicle width direction of the vehicle 1 detected by the vehicle speed detecting device 20, the steering angle detected by the steering angle detecting device 30, the acceleration in the longitudinal direction detected by an acceleration sensor, and the yaw rate value from a yaw rate sensor.

In step S303, the lane shape recognizing unit 102 processes the captured image of the imaging unit 101 read in step S301 to recognize the travel lane along which the vehicle 1 travels and to calculate the position, the vehicle posture, or the like of the vehicle 1 relative to the travel lane.

In step S304, the termination unit 108 determines whether or not the process of correcting the imaging angle of the imaging unit 101 is completed. When it is determined that the process completes, the process progresses to step S305. When it is determined that the process does not complete, the process progresses to step S314. Specifically, when the condition of the following expression is satisfied, the process progresses to step S305. Otherwise, the process progresses to step S314.

$$FlgAimComplt < 1 \qquad \qquad ...(3-1)$$

In Expression (3-1), FlgAimComplt represents a flag indicating whether or not the process of correcting the imaging angle of the imaging unit 101 is completed. When FlgAimComplt="0", it means that the process of correcting the imaging angle of the imaging unit 101 is not completed. When FlgAimComplt="1", it means that the process of correcting the imaging angle of the imaging unit 101 is completed. The initial value of FlgAimComplt is set to "0".

In step S305, based on the extension lines of a pair of left and right lane markers in the far area and the near area, the lane shape recognizing unit 102 calculates the coordinates of the intersections of the extension lines using the lane shape recognized in step S303. As described above, the intersection coordinates for the near area calculated by the lane shape recognizing unit 102 in this step are defined as (Pn_x, Pn_y) and the intersection coordinates for the far area are defined as (Pf_x, Pf_y).

In step S306, the straight lane determining unit 410 determines whether or not the travel lane is a straight lane using the following expression based on the intersection coordinates for the far area and the near area calculated in step S305. When Expressions (2-1) and (2-2) are both satisfied, the process progresses to step S307. Otherwise, the process progresses to step S314. This process is the same as the process of step S205 in the second embodiment.

In step S307, the parallel traveling determining unit 420 calculates the speed Ydot in the transverse direction of the vehicle by using the offset position (the distance to the lane marker in the transverse direction) Y in the transverse direction of the vehicle relative to the travel lane calculated in step S303 as an input and performing a pseudo temporal differentiation using the transfer functions of Expressions (0-2) and (0-3). When Expression (0-4) is satisfied, the process progresses to step S308. Otherwise, the process progresses to step S314. This process is the same as the process of step S206 in the second embodiment.

In step S308, the information bias determining unit 105 determines whether or not all the conditions of the following expressions are satisfied. When it is determined that all the conditions of the following expressions are satisfied, the process progresses to step S309. Otherwise, the process progresses to step S314.

$$abs(Row) < TH\_ROW \qquad \qquad ...(3-2)$$

$$abs(SumTotalRow+Row) < TH\_ROW \qquad \qquad ...(3-3)$$

$$abs(ysoku) < TH\_YS \qquad \qquad ...(3-4)$$

$$abs(SumTotalYsoku+ysoku) < TH\_YS \qquad \qquad ...(3-5)$$

$$abs(YawRate) < TH\_YR \qquad \qquad ...(3-6)$$

$$abs(SumTotalYR+YawRate) < TH\_YR \qquad \qquad ...(3-7)$$

$$abs(VspDot) < TH\_VD \qquad \qquad ...(3-8)$$

$$abs(SumTotalVD+VspDot) < TH\_VD \qquad \qquad ...(3-9)$$

In these expressions, ysoku represents a parameter indicating the speed in the vehicle width direction of the vehicle 1. The value of ysoku may employ the speed in the vehicle width direction as a state variable of a Kalman filter for recognizing a lane, which is used in the lane recognizing process of step S303, without any change, or may employ a value obtained by temporally differentiating the position in the vehicle width direction relative to the travel lane. Sum-TotalYsoku represents the total sum of ysoku. TH_YS represents a threshold value when the vehicle 1 is considered to travel straight, whereby the vehicle 1 is determined to travel straight when the absolute value of the speed ysoku in the vehicle width direction and the absolute value of the total sum SumTotalYsoku+ysoku thereof are less than TH_YS as expressed by Expressions (3-4) and (3-5).

Similarly, the yaw rate value YawRate of the vehicle 1 in Expressions (3-6) and (3-7) may employ the yaw rate as a state variable of a Kalman filter for recognizing a lane, which is used in the lane recognizing process of step S303, without any change, or may employ a value obtained by temporally differentiating the yaw angle relative to the travel lane.

The meanings of the expressions other than Expressions (3-4) and (3-5) are the same as those in the first embodiment and the second embodiment.

In step S309, SumTotalRow, SumTotalYsoku, SumTotalYR, SumTotalVD, SumCount, and coordinate data for near area intersections are updated and are stored in a memory for collecting using the following expressions.

$$\mathrm{SumTotalRow=SumTotalRow+Row} \qquad \ldots(3\text{-}10)$$

$$\mathrm{SumTotalYsoku=SumTotalYsoku+ysoku} \qquad \ldots(3\text{-}11)$$

$$\mathrm{SumTotalYR=SumTotalYR+YawRate} \qquad \ldots(3\text{-}12)$$

$$\mathrm{SumTotalVD=SumTotalVD+VspDot} \qquad \ldots(3\text{-}13)$$

$$\mathrm{FOE\_X\_DataRcd[SumCount]=Pn\_x} \qquad \ldots(3\text{-}14)$$

$$\mathrm{FOE\_Y\_DataRcd[SumCount]=Pn\_y} \qquad \ldots(3\text{-}15)$$

$$\mathrm{SumCount=SumCount+1} \qquad \ldots(3\text{-}16)$$

The processes of steps S310 to S312 are the same as the processes of steps S209 to S211 illustrated in FIG. 8.

In step S313, the imaging angle correcting unit 106 sets the completion flag FlgAimComplt of the process of estimating the imaging angle of the imaging unit 101 and determines the imaging angle of the imaging unit 101 using the following expressions. These coordinates are used as origin coordinates when the lane recognizing process of step S303 is performed.

$$\mathrm{FlgAimComplt=1} \qquad \ldots(3\text{-}17)$$

$$\mathrm{FOE\_X\_est=FOE\_X\_e\_tmp} \qquad \ldots(3\text{-}18)$$

$$FOE\_Y\_est=FOE\_Y\_e\_tmp \quad\quad\quad ...(3-19)$$

In step S314, a past value used in a filter or the like or a counter value used in a timer or the like is updated and the process is terminated.

The values of FlgAimComplt and SumTotalRow are initialized to "0" before performing the process flow illustrated in FIG. 10.

(Summary)

The configuration of the in-vehicle image recognizing device according to this embodiment is the same as that in the second embodiment, except for the termination unit 108.

In the in-vehicle image recognizing device according to this embodiment, when the calculated standard deviation is less than a predetermined value, the termination unit 108 terminates the correcting of the imaging angle.

Accordingly, when it is determined that the deviation between the candidates of the imaging angle of the imaging unit 101 is small, the process of correcting the imaging angle can be terminated and it is thus possible to reduce the processing load of the in-vehicle image recognizing device.

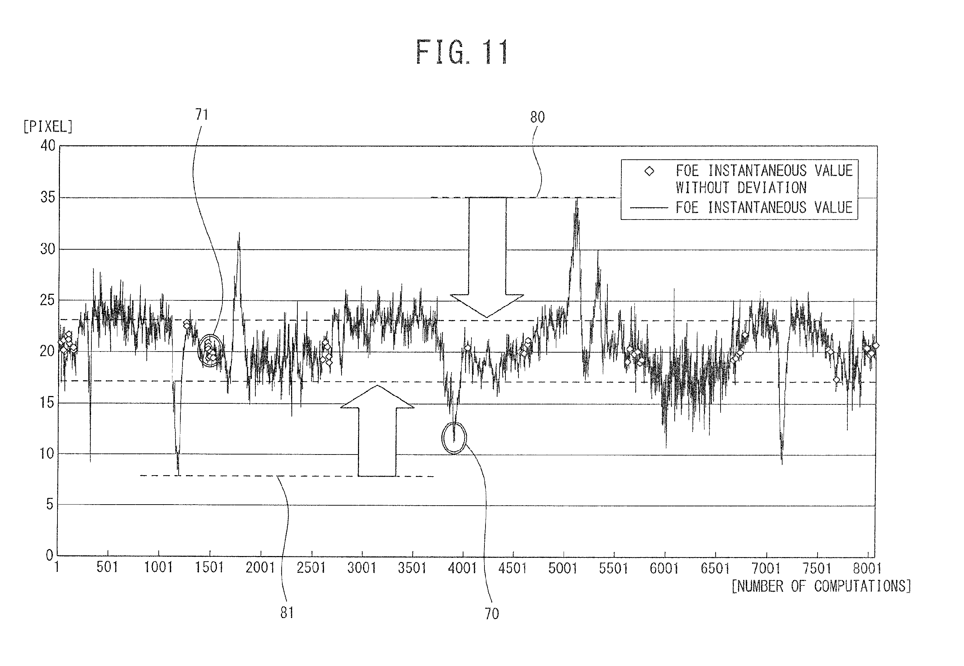

FIG. 11 is a diagram illustrating the effects of in-vehicle image recognizing device according to this embodiment. The graph illustrated in FIG. 11 represents the results of the lane recognizing process according to this embodiment in scenes in which a highway has a lot of slow curves.

In FIG. 11, data in a range 70 surrounded with a circle is data indicating the result of Pn_x calculated in step S305. Data in a range 71 indicates the result of Pn_x collected in step S307.

According to the results illustrated in FIG. 11, the worst values indicated by dotted lines 80 and 81 become closer to a true value of 120.0 pixels by about 10 pixels. A case in which the deviation is almost reduced to a half (reduced by about 44%) based on the standard deviation has been confirmed. The number of data pieces is reduced from 8000 to 50 and the processing load of the standard deviation is reduced.

(Effects of Third Embodiment)

This embodiment has the following effects in addition to the effects of the first embodiment and the second embodiment. (1) When the standard deviation calculated by the standard deviation calculating unit 107 is less than a predetermined value, the termination unit 108 terminates the correcting of the imaging angle.

Accordingly, when it is determined that the deviation between the candidates of the imaging angle of the imaging unit 101 is small, the process of correcting the imaging angle can be terminated and it is thus possible to reduce the processing load of the in-vehicle image recognizing device.

(2) In this embodiment, the behavior of the vehicle 1 recognized by the vehicle behavior recognizing unit 103 is information on the translational behavior in the vehicle width direction of the vehicle 1. The vehicle behavior recognizing unit 103 recognizes the behavior of the vehicle 1 based on the temporal variation in the position in the vehicle width direction or the yaw angle of the vehicle 1 relative to the travel lane recognized by the lane shape recognizing unit 102.

Accordingly, it is possible to enhance accuracy in estimating the imaging angle of the imaging unit 101.

In the above description, the vehicle speed detecting device 20 constitutes the vehicle speed detecting unit. The steering angle detecting device 30 constitutes the steering angle detecting unit. The lane shape recognizing unit 102 constitutes the parameter detecting unit. The vehicle behavior recognizing unit 103, or the vehicle speed detecting device 20, the steering angle detecting device 30, and the steering angle control device 40 constitute the parameter detecting unit. The straight lane determining unit 410 constitutes the intersection bias determining unit and the recognition bias determining unit. The information bias determining unit 105 constitutes the convergence determining unit, the integrating unit, and the straight traveling state determining unit. The imaging angle deriving unit 104 and the imaging angle correcting unit 106 constitutes the aiming execution unit.

Priority is claimed on Japanese Patent Application No. 2011-131222 (filed on June 13, 2011), the content of which is incorporated herein by reference in entirety.

While the present invention has been described with reference to the definite number of embodiments, the scope of the present invention is not limited thereto and improvements and modifications of the embodiments based on the above disclosure are obvious to those skilled in the art.

Reference Signs List

1: vehicle
10: camera
10a: image processing device
20: vehicle speed detecting device
30: steering angle detecting device
40: steering angle control device
50: steering angle actuator
101: imaging unit
102: lane shape recognizing unit
103: vehicle behavior recognizing unit
104: imaging angle deriving unit
105: determination unit
106: imaging angle correcting unit
107: standard deviation calculating unit
108: termination unit
200: white line candidate point detecting unit
300: lane recognition processing unit
310: road shape calculating unit
320: road parameter estimating unit
400: optical axis correcting unit
410: straight lane determining unit
420: parallel traveling determining unit
430: virtual vanishing point calculating unit

**Claims**

1.  A road shape determining device comprising:

    an imaging unit for capturing an image of a periphery of a vehicle;
    a lane shape recognizing unit for recognizing a lane shape of a travel lane along which the vehicle travels on the basis of the image captured by the imaging unit;
    a parallel traveling determining unit for determining whether or not the vehicle travels in parallel to the travel lane;
    an intersection bias determining unit for determining an intersection bias which is a bias between an intersection of extension lines obtained by approximating left and right lane markers located in a near area to a straight line, and an intersection of extension lines obtained by approximating left and right lane markers located in a far area to a straight line, on the basis of the lane shape in the near area relatively close to the vehicle and the lane shape in the far area distant from the vehicle out of the lane shapes recognized by the lane shape recognizing unit; and
    a straight lane determining unit for determining that the travel lane is a straight lane when the intersection bias determining unit determines that the intersection bias is equal to or less than a predetermined threshold value.

2.  An in-vehicle image recognizing device comprising:

    the road shape determining device according to claim 1; and
    an imaging angle correcting unit for correcting an imaging angle of the imaging unit when the road shape determining device determines that the travel lane is a straight lane.

3.  The in-vehicle image recognizing device according to claim 2, further comprising an imaging angle deriving unit for calculating an imaging angle of the imaging unit based on the lane shape recognized by the lane shape recognizing unit,
    wherein the imaging angle correcting unit corrects the imaging angle of the imaging unit using the imaging angle calculated by the imaging angle deriving unit when the road shape determining device determines that the travel lane is a straight lane.

4. The in-vehicle image recognizing device according to claim 3, further comprising a standard deviation calculating unit for calculating a standard deviation of the imaging angle calculated by the imaging angle deriving unit when the intersection bias determining unit determines that the intersection bias is equal to or less than a predetermined threshold value,
wherein the imaging angle correcting unit corrects the imaging angle of the imaging unit depending on the standard deviation calculated by the standard deviation calculating unit.

5. The in-vehicle image recognizing device according to claim 4, wherein correcting of the imaging angle is terminated when the standard deviation calculated by the standard deviation calculating unit is less than a predetermined value.

6. The in-vehicle image recognizing device according to any one of claims 2 to 5, further comprising a recognition bias determining unit for determining the shape of the travel lane based on a bias of the lane shape recognized by using a road curvature recognized by the lane shape recognizing unit,
wherein the imaging angle correcting unit corrects the imaging angle of the imaging unit, when the intersection bias determining unit determines that the intersection bias is equal to or less than a predetermined threshold value and the recognition bias determining unit determines that the travel lane is a straight lane.

7. The in-vehicle image recognizing device according to claim 6, wherein the recognition bias determining unit determines that the travel lane is a straight lane when the absolute value of the bias of the lane shape recognized by the lane shape recognizing unit is less than a predetermined threshold value and the total sum of the bias is less than the threshold value.

8. The in-vehicle image recognizing device according to any one of claims 2 to 7, further comprising:

    a vehicle speed detecting unit for detecting a vehicle speed of the vehicle;
    a steering angle detecting unit for detecting a steering angle of the vehicle; and
    a vehicle behavior recognizing unit for recognizing a behavior of the vehicle based on the vehicle speed detected by the vehicle speed detecting unit and the steering angle detected by the steering angle detecting unit,
    wherein the imaging angle correcting unit corrects the imaging angle of the imaging unit when it is determined that a bias of the behavior of the vehicle recognized by the vehicle behavior recognizing unit is equal to or less than a predetermined threshold value.

9. The in-vehicle image recognizing device according to claim 8, wherein the behavior of the vehicle recognized by the vehicle behavior recognizing unit is information on a translational behavior in a vehicle width direction of the vehicle.

10. The in-vehicle image recognizing device according to claim 8, wherein the behavior of the vehicle recognized by the vehicle behavior recognizing unit is information on a rotational behavior in a vehicle width direction of the vehicle.

11. The in-vehicle image recognizing device according to claim 8, wherein the vehicle behavior recognizing unit recognizes the behavior of the vehicle based on a temporal variation in a position in the vehicle width direction of the vehicle or a yaw angle relative to the travel lane recognized by the lane shape recognizing unit.

12. An imaging axis adjusting device configured to automatically adjust an imaging axis of an imaging unit disposed in a vehicle, comprising:

    a parameter detecting unit for detecting a parameter associated with a road curvature;
    a convergence determining unit for determining whether or not a value of the parameter associated with the road curvature converges on a predetermined range;
    an integrating unit for integrating the value of the parameter within a predetermined time from a time point at which the convergence determining unit determines that the value of the parameter converges;
    a straight traveling state determining unit for determining whether or not the vehicle is in a straight traveling state by determining that an integrated value calculated by the integrating unit is less than a predetermined value; and
    an aiming execution unit for performing an aiming process when the straight traveling state determining unit determines that the vehicle is in the straight traveling state.

13. A lane recognizing method comprising:

capturing an image of periphery of a vehicle with an imaging unit disposed in the vehicle;

recognizing a lane shape of a travel lane in which the vehicle travels based on the image captured;

calculating an imaging angle of the imaging unit based on the lane shape recognized;

correcting the imaging angle of the imaging unit using the imaging angle detected when it is determined that an intersection bias, which is a bias between an intersection of extension lines obtained by approximating left and right lane markers located in a near area to a straight line, and an intersection of extension lines obtained by approximating left and right lane markers located in a far area to a straight line, is equal to or less than a predetermined threshold value, on the basis of the lane shape in the near area relatively close to the vehicle and the lane shape in the far area distant from the vehicle out of the lane shapes recognized.

# FIG. 1

CAMERA ~10

IMAGE PROCESSING DEVICE ~10a

~1

VEHICLE SPEED
DETECTING DEVICE ~20

STEERING ANGLE
CONTROL DEVICE ~40

STEERING ANGLE
DETECTING DEVICE 30~

STEERING ANGLE
ACTUATOR ~50

FIG. 2

VEHICLE BEHAVIOR
RECOGNIZING UNIT ~103

IMAGING UNIT ~101

LANE SHAPE
RECOGNIZING
UNIT ~102

INFORMATION BIAS
DETERMINING UNIT ~105

IMAGING ANGLE
DERIVING UNIT ~104

IMAGING ANGLE
CORRECTING UNIT ~106

FIG. 3

~102

IMAGING UNIT ~101

WHITE LINE
CANDIDATE POINT
DETECTING UNIT ~200

LANE RECOGNITION PROCESSING UNIT ~300

ROAD SHAPE
CALCULATING UNIT ~310

ROAD PARAMETER
ESTIMATING UNIT ~320

OPTICAL AXIS
CORRECTING UNIT ~400

STRAIGHT LANE
DETERMINING UNIT ~410

PARALLEL TRAVELING
DETERMINING UNIT ~420

VIRTUAL VANISHING
POINT CALCULATING UNIT ~430

FIG. 4

# FIG. 5

DOTTED LINE: APPROXIMATE
STRAIGHT LINE IN NEAR AREA
SOLID LINE: APPROXIMATE
STRAIGHT LINE IN FAR AREA

FAR AREA

NEAR AREA

EP 2 720 213 A1

# FIG. 6

```
                    ┌─────────────┐
                    │    START    │
                    └──────┬──────┘
                           ↓
              ┌────────────────────────┐
              │       READ IMAGE       │──── S101
              └───────────┬────────────┘
                          ↓
         ┌──────────────────────────────────┐
         │ READ VEHICLE BEHAVIOR INFORMATION │──── S102
         └────────────────┬─────────────────┘
                          ↓
         ┌──────────────────────────────────┐
         │  PERFORM LANE RECOGNIZING PROCESS │──── S103
         └────────────────┬─────────────────┘
                          ↓
         ┌──────────────────────────────────┐
         │ CALCULATE INTERSECTIONS BASED ON  │
         │ EXTENSION LINES OF LEFT AND RIGHT │──── S104
         │ LANE MARKERS DETECTED IN NEAR AREA│
         │            AND FAR AREA           │
         └────────────────┬─────────────────┘
                          ↓                          ── S105
              ╱───────────────────────╲
             ╱    IS DIFFERENCE BETWEEN ╲  No
            ╱ INTERSECTIONS FOR NEAR AREA AND FAR ╲──────┐
            ╲ AREA SMALL (=STRAIGHT LANE)?        ╱      │
             ╲───────────┬───────────╱                  │
                         │ Yes                           │
                         ↓             ── S106           │
                 ╱───────────────╲                       │
                ╱ IS TRANSVERSE    ╲ No                  │
                ╲ VELOCITY OF VEHICLE SMALL ╱────────────┤
                ╲ (=STRAIGHT TRAVELING)?  ╱              │
                 ╲──────┬───────╱                        │
                        │ Yes          ── S107           │
                        ↓                                │
                ╱───────────────╲ No                     │
               ╱ IS CURVATURE SMALL ╲─────────────────── ┤
               ╲ AND IS THERE NO BIAS? ╱                 │
                ╲──────┬───────╱                         │
                       │ Yes                             │
                       ↓                                 │
              ┌────────────────────┐                     │
              │   UPDATE TOTAL SUM │──── S108            │
              └─────────┬──────────┘                     │
                        ↓                                 │
              ┌────────────────────────┐                 │
              │ ESTIMATE MOUNTING ANGLE │──── S109       │
              └─────────┬──────────────┘                 │
                        ↓←───────────────────────────────┘
         ┌──────────────────────────────────┐
         │ UPDATE PAST VALUE OR COUNTER VALUE│──── S110
         └────────────────┬─────────────────┘
                          ↓
                   ┌─────────────┐
                   │     END     │
                   └─────────────┘
```

# FIG. 7

BEHAVIOR RECOGNIZING UNIT ~103

IMAGING UNIT ~101

LANE SHAPE RECOGNIZING UNIT ~102

INFORMATION BIAS DETERMINING UNIT ~105

IMAGING ANGLE DERIVING UNIT ~104

STANDARD DEVIATION CALCULATING UNIT ~107

IMAGING ANGLE CORRECTING UNIT ~106

# FIG. 8

( START )

READ IMAGE — S201

READ VEHICLE BEHAVIOR INFORMATION — S202

LANE RECOGNIZING PROCESS — S203

CALCULATE INTERSECTIONS OF EXTENSION LINES BASED ON LEFT AND RIGHT LANE MARKERS — S204

IS DIFFERENCE BETWEEN INTERSECTIONS FOR NEAR AREA AND FAR AREA SMALL (=STRAIGHT LANE)? — S205 — No

Yes

IS TRANSVERSE VELOCITY OF VEHICLE SMALL (=STRAIGHT TRAVELING)? — S206 — No

Yes

IS THERE NO BIAS IN INFORMATION? — S207 — No

Yes

UPDATE TOTAL SUM AND COLLECT NEAR AREA INTERSECTION — S208

IS NUMBER OF DATA PIECES COLLECTED EQUAL TO OR MORE THAN 50? — S209 — No

Yes

ESTIMATE MOUNTING ANGLE AND CALCULATE STANDARD DEVIATION — S210

IS DEVIATION SMALL? — S211 — No

Yes

DETERMINE ESTIMATED VALUE OF MOUNTING ANGLE — S212

UPDATE PAST VALUE OR COUNTER VALUE — S213

( END )

# FIG. 9

# FIG. 10

START

READ IMAGE — S301

READ VEHICLE BEHAVIOR INFORMATION — S302

LANE RECOGNIZING PROCESS — S303

S304
DOES ESTIMATION PROCESS COMPLETE? — No

↓ Yes

CALCULATE INTERSECTIONS OF EXTENSION LINES FROM LEFT AND RIGHT LANE MARKERS — S305

S306
IS DIFFERENCE BETWEEN INTERSECTIONS FOR NEAR AREA AND FAR AREA SMALL (=STRAIGHT LANE)? — No

↓ Yes

S307
IS TRANSVERSE VELOCITY OF VEHICLE SMALL (=STRAIGHT TRAVELING)? — No

↓ Yes

S308
IS THERE NO BIAS IN INFORMATION? — No

↓ Yes

UPDATE TOTAL SUM AND COLLECT NEAR AREA INTERSECTION — S309

S310
IS NUMBER OF DATA PIECES COLLECTED EQUAL TO OR MORE THAN 50? — No

↓ Yes

ESTIMATE MOUNTING ANGLE AND CALCULATE STANDARD DEVIATION — S311

S312
IS DEVIATION SMALL? — No

↓ Yes

DETERMINE ESTIMATED VALUE OF MOUNTING ANGLE, PROCESS COMPLETION FLAG OF ESTIMATION PROCESS — S313

UPDATE PAST VALUE OR COUNTER VALUE — S314

END

# FIG. 11

<div align="center">

**INTERNATIONAL SEARCH REPORT**

</div>

| | International application No. |
|---|---|
| | PCT/JP2012/001576 |

| A. CLASSIFICATION OF SUBJECT MATTER |
|---|
| *G08G1/16*(2006.01)i, *G06T1/00*(2006.01)i, *G06T7/60*(2006.01)i |

According to International Patent Classification (IPC) or to both national classification and IPC

| B. FIELDS SEARCHED |
|---|
| Minimum documentation searched (classification system followed by classification symbols) |
| G08G1/16, G06T1/00, G06T7/60 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| P,X<br>P,A | JP 2011-221983 A (Nissan Motor Co., Ltd.),<br>04 November 2011 (04.11.2011),<br>claims; paragraphs [0037] to [0051]; fig. 4 to 8<br>& EP 2371648 A1          & CN 102201056 A | 1-3,13<br>4-12 |
| A | WO 2010/140578 A1 (NEC Corp.),<br>09 December 2010 (09.12.2010),<br>entire text; all drawings<br>(Family: none) | 1-13 |
| A | JP 2009-234543 A (Mazda Motor Corp.),<br>15 October 2009 (15.10.2009),<br>entire text; all drawings<br>(Family: none) | 1-13 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June, 2012 (01.06.12) | 12 June, 2012 (12.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

# EP 2 720 213 A1

**INTERNATIONAL SEARCH REPORT**

| International application No. |
| --- |
| PCT/JP2012/001576 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-259995 A  (Nissan Motor Co., Ltd.), 13 September 2002 (13.09.2002), entire text; all drawings (Family: none) | 12 |
| A | JP 2008-3959 A  (Omron Corp.), 10 January 2008 (10.01.2008), entire text; all drawings (Family: none) | 12 |

Form PCT/ISA/210 (continuation of second sheet) (July 2009)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000242899 A
- JP 2004252827 A
- JP 2004318618 A
- JP 2011131222 A